# EUROPÄISCHE PATENTSCHRIFT

(11) **EP 0 470 219 B1**
(45) Veröffentlichungstag und Bekanntmachung des Hinweises auf die Patenterteilung: **02.08.1995**
(21) Anmeldenummer: 91903838.0
(22) Anmeldetag: 25.02.1991
(51) Int. Cl.: B62D 43/00

(54) **ERSATZRADHEBE- UND -ABSENKVORRICHTUNG**
SPARE WHEEL RAISING AND LOWERING DEVICE
DISPOSITIF DE LEVAGE ET D'ABAISSEMENT D'UNE ROUE DE SECOURS

(30) Priorität: 23.02.1990 CH 580/90
(43) Veröffentlichungstag der Anmeldung: 12.02.1992
(73) Patentinhaber: BUCHER-GUYER AG Maschinenfabrik, CH-8166 Niederweningen (CH)
(72) Erfinder: SASSE, Alfred, CH-5313 Klingnau (CH)
(86) Internationale Anmeldenummer: CH9100043
(87) Internationale Veröffentlichungsnummer: WO9112986

(56) Entgegenhaltungen:
- DE-A- 1 530 640
- DE-A- 3 740 819
- FR-A- 1 019 845

## Beschreibung

Die Erfindung betrifft eine Ersatzradhebe- und absenkvorrichtung für ein vornehmlich hinter der Fahrerkabine eines Nutzfahrzeuges zu deponieren bestimmtes, mit einer Felge versehenes Ersatzrad mit einer das Ersatzrad parallel zu seiner Drehachse durchsetzenden Welle.

Letztere dienen dem Zweck, im Falle eines Reifenschadens die Weiterfahrt des Fahrzeuges durch einen Radwechsel zu gewährleisten.

Eine solche Vorrichtung ist u.a. durch die DE-A-37 40 819 bekannt geworden, bei der das Ersatzrad mit einem quer zur Fahrzeuglängsrichtung verschwenkbaren einarmigen Schwenkhebel aufgenommen und in eingeschwenkter Endstellung des Schwenkhebels in einer Haltevorrichtung gesichert ist.

Durch diese Vorrichtung wird das Ersatzrad mittels eines hydraulisch betriebenen Arbeitszylinders auf eine bestimmte Höhe gehoben, wo es durch eine Haltevorrichtung aufgenommen und gesichert wird. Zudem beansprucht diese Vorrichtung Laderaum und einen relativ aufwendigen Mechanismus.

Der vorliegenden Erfindung liegt die Aufgabe zugrunde, eine Ersatzradhebe- und -absenkvorrichtung der eingangs genannten Art zu schaffen, mit welcher durch einen geringeren Kraftaufwand das Ersatzrad auf dem Fahrzeug deponiert und von seinem Bereitstellungsort abgeholt werden kann.

Erfindungsgemäss wird diese Aufgabe dadurch gelöst, dass die durchsetzende Welle beidseits des Ersatzrades jeweils eine Haspel mit einem eingelegten bzw. verankerten Ende wenigstens eines Seiles aufweist, das an einem über dem Ersatzrad angeordneten Ausleger befestigt ist.

Dadurch kann das Ersatzrad auf einfache und bequeme Weise aus seiner Bereitstellungslage genommen bzw. gegen ein anderes Rad ausgetauscht werden.

Dadurch, dass der Ausleger um eine senkrechte Achse am Nutzfahrzeug schwenkbar ausgebildet ist, kann mit der Ersatzradhebe- und -absenkvorrichtung eine grössere Betriebsfläche bestrichen und somit eine wesentliche Erleichterung in der Anwendung erzielt werden.

Dadurch, dass das Seil etwa in der Hälfte seiner Länge oder die Seile mit ihren von den Haspeln abgewendeten Enden an einem an dem freien Ende des Auslegers befestigten und um eine senkrechte Achse gegenüber dem Ausleger schwenkbaren, sich horizontal erstreckenden Arm gehaltert sind, ist es möglich, ein aufgehängtes Ersatzrad in jede Lage zu verdrehen und dadurch den Hebe- oder Absenkvorgang zu erleichtern.

Ein weiterer Vorteil kann dadurch erzielt werden, dass der Arm wenigstens annähernd die Länge der Breite des Ersatzrades aufweist, sodass beim Aufrollen eine sich kaum in Reibung auswirkende Berührung zwischen Reifen und Seil eintritt, bzw. beim Abrollen durch leichtes Verkanten des Rades eine Bremswirkung durch das Seil entsteht.

Zur gleichmässigen Gewichts- und Kraftverteilung auf den Arm ist seine Schwenkachse etwa in der Schwerachse des Ersatzrades vorgesehen. Diese liegt oftmals aufgrund des ungleichmässigen Felgenquerschnitts ausserhalb der Längsmittelachse eines Reifens.

Ideal erweist sich die Bedienung der Ersatzradhebe- und absenkvorrichtung u.a. auch dann, wenn die Welle bzw. die Achse der Haspel konzentrisch durch die Drehachse des Ersatzrades verläuft, wobei die Welle mittels Flansch an einer Seite der Felge in der Drehachse des Ersatzrades liegend befestigt ist.

Dabei ist es zweckmässig, wenn zur Verbindung von Welle und Ersatzrad der Flansch mittels den für die Radbefestigung am Fahrzeug vorgesehenen Durchtrittsöffnungen für die Radschrauben an der Felge montiert wird.

Zur Erzielung einer genügenden Stabilität ist der Flansch durch Rippen an der Welle abgestützt, wobei diese Rippen am Umfang der Welle verteilt und durch Schweissen befestigt sind.

Die seitlich an der Welle angeordneten Haspel bestehen vorteilhaft aus zwei an der Welle beabstandeten Führungsflanschen oder ähnlichen zur Führung des Seils geeigneten Mitteln.

Ein Ausführungsbeispiel der Erfindung ist anhand der Zeichnung in der nachfolgenden Beschreibung erläutert. Es zeigen:
- Fig. 1: einen Querschnitt durch ein an der Ersatzradhebe- und -absenkvorrichtung hängendes Rad und
- Fig. 2: eine Seitenansicht gemäss Pfeil A der Vorrichtung nach Fig. 1.

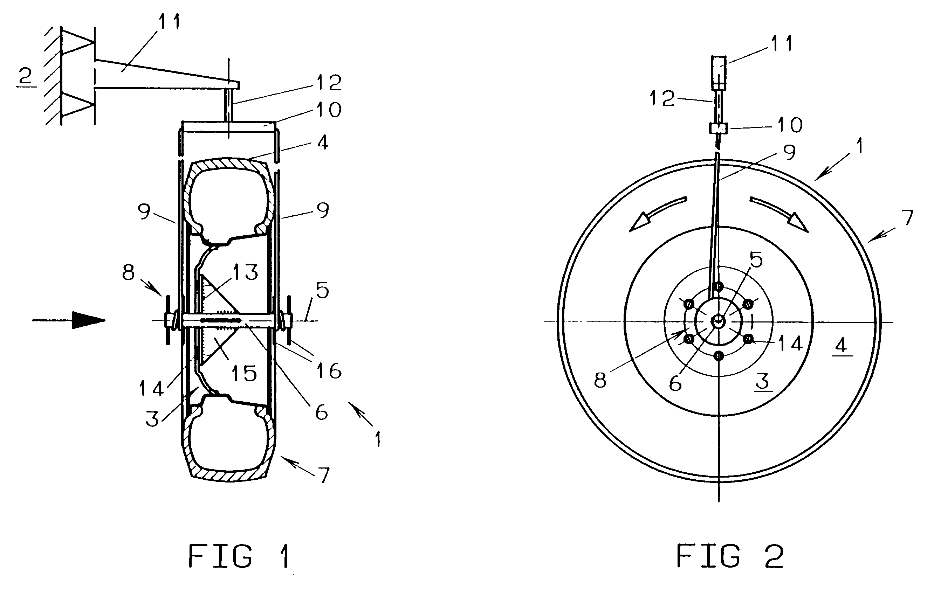

Die Fig. 1 und 2 veranschaulichen eine Ersatzradhebe- und -absenkvorrichtung 1 die an einer andeutungsweise gezeigten Rückwand 2 einer Fahrerkabine eines Nutzfahrzeuges angeordnet ist. Zweckmässigerweise ist der Abstellplatz des Ersatzrades 7 auf einer Seite des Fahrzeuges und in einer Einfassung vorgesehen. Das wenigstens aus einer Felge 3 mit montiertem Reifen 4 bestehende Ersatzrad 7 wird konzentrisch zur Drehachse 5 von einer Welle 6 durchsetzt, die auf beiden Seiten des Ersatzrades 7 jeweils eine Haspel 8 aufweist, in welchen die Enden eines Seiles 9 eingelegt bzw. verankert sind. Das Seil 9 ist an einem schwenk- oder drehbaren Arm 10 befestigt, beispielsweise indem es wie in Fig. 1 gezeichnet diesen Arm 10 in Längsrichtung durchsetzt und festgehalten ist oder dadurch, dass jeweils jedem Haspel 8 ein separates Seil 9 zugeteilt ist, das am einen Ende des Arms 10 befestigt ist.
Der Arm 10 wiederum ist an einem schwenkbar angeordneten Ausleger 11 um eine senkrechte Achse drehbar befestigt, sodass das Ersatzrad 7 im freihängenden Zustand um die eigene Vertikalachse und um eine Schwenkachse versetzt werden kann. Die Schwenkachse befindet sich an dem der Rückwand 2 der Fahrerkabine zugewendeten Ende des Auslegers 11. Das Drehlager der Achse 12 ist durch Axiallager ausgebildet. Der zur Aufhängung des Ersatzrades 7 benutzte Arm 10 weist wenigstens annähernd die Länge der Breite des Ersatzrades 7 bzw. des Reifen 4 auf, damit bei der Jo-Jo-artigen Hebebewegung (Aufrolleffekt) zwischen Seil 9 und Reifen 4 keine oder kaum Reibung entsteht, bzw. beim Absenken des Rades in leicht geneigter Seitenlage Bremsreibung erzeugt werden kann.

Gleichzeitig wird das Ersatzrad 7 in der hängenden Lage gegen seitliches Abkippen durch das bzw. die Seile 9 geführt. Bei einem den Arm 10 durchsetzenden Seil 9 können unterschiedlich lange Seiltrums durch Bewegen des aufgehängten Rades um eine horizontale Axe ausgeglichen werden.

Die Achse 12 ist an dem Arm 10 so angeordnet, damit sie etwa in der Schwerachse des Ersatzrades 7 liegt. Die Welle 6 ist zwischen den Haspeln 8 mit einem Flansch 13 versehen, der mit dem Ersatzrad 7 konzentrisch verbunden ist. Zur Befestigung der Welle 6 an der Felge 3 werden die Durchtrittsöffnungen 14 der Radschrauben benutzt und zur Erzielung einer ausreichenden Stabilität ist der Flansch 13 durch Rippen 15 an der Welle 6 abgestützt. Die Haspeln 8 sind durch jeweils zwei an der Welle 6 beabstandete Führungsflanschen 16 ausgebildet.

Zur Erzeugung der Drehbewegung beim Anheben des Ersatzrades 7 durch Aufrollen des Seils auf der Haspel 8 könnte auch ein mit der Welle 6 verbindbarer Kurbelantrieb (nicht gezeigt) verwendet werden.

## Patentansprüche

1. Ersatzradhebe- und -absenkvorrichtung (1) für ein vornehmlich hinter der Fahrerkabine eines Nutzfahrzeuges zu deponieren bestimmtes, mit einer Felge (3) versehenes Ersatzrad (7) mit einer das Ersatzrad parallel zu seiner Drehachse durchsetzenden Welle (6), dadurch **gekennzeichnet**, dass die durchsetzende Welle (6) beidseits des Ersatzrades (7) jeweils eine Haspel (8) mit einem eingelegten bzw. verankerten Ende wenigstens eines Seiles (9) aufweist, das an einem über dem Ersatzrad (7) angeordneten Ausleger (11) befestigt ist.

2. Ersatzradhebe- und -absenkvorrichtung nach Anspruch 1, dadurch **gekennzeichnet**, dass der Ausleger (11) um eine senkrechte Achse schwenkbar ausgebildet ist.

3. Ersatzradhebe- und -absenkvorrichtung nach einem der Ansprüche 1 oder 2, dadurch **gekennzeichnet**, dass das Seil (9) etwa in der Hälfte seiner Länge oder die Seile mit ihren von den Haspeln (8) abgewendeten Enden an einem an dem freien Ende des Auslegers (11) um eine senkrechte Achse (12) schwenkbaren, sich horizontal erstreckenden Arm (10) befestigt sind.

4. Ersatzradhebe- und -absenkvorrichtung nach einem der Ansprüche 2 und 3, dadurch gekennzeichnet, dass der Arm (10) annähernd die Länge der Breite des Ersatzrades (7) aufweist.

5. Ersatzradhebe- und -absenkvorrichtung nach einem der Ansprüche 2 bis 4, dadurch gekennzeichnet, dass die Schwenkachse (12) des Arms (10) etwa in der Schwerachse des Ersatzrades (7) vorgesehen ist.

6. Ersatzradhebe- und -absenkvorrichtung nach einem der Ansprüche 1 bis 5, dadurch gekennzeichnet, dass die Welle (6) mittels Flansch (13) an einer Seite der Felge (3) konzentrisch befestigt ist.

7. Ersatzradhebe- und -absenkvorrichtung nach Anspruch 6, dadurch gekennzeichnet, dass zur Befestigung der Welle (6) die in der Felge (3) ausgebildeten Durch trittsöffnungen (14) für die Radschrauben vorgesehen sind.

8. Ersatzradhebe- und -absenkvorrichtung nach einem der Ansprüche 6 bis 8, dadurch gekennzeichnet, dass der Flansch (13) durch Rippen (15) an der Welle (6) abgestützt ist.

9. Ersatzradhebe- und -absenkvorrichtung nach einem der Ansprüche 1 bis 8, dadurch gekennzeichnet, dass die Haspeln (8) durch zwei beabstandete Führungsflansche (16) ausgebildet sind.

10. Ersatzradhebe- und -absenkvorrichtung nach einem der Ansprüche 1 bis 9, dadurch gekennzeichnet, dass die Welle 6 mit einer Kurbel antriebsverbunden ist.

## Claims

1. Spare wheel raising and lowering device (1) for a spare wheel (7) provided with a rim (3), in particular designed to be stowed behind the driver's cab of a utility vehicle, comprising a shaft (6) traversing the spare wheel parallel to its axis of rotation, characterised in that the traversing shaft (6) is provided on either side of the spare wheel (7) with a windlass (8) in which the end of at least one cable (9) secured to an outrigger (11) arranged above the spare wheel (7) is inserted or anchored.

2. Spare wheel raising and lowering device according to claim 1, characterised in that the outrigger (11) is designed to slew around a vertical axis.

3. Spare wheel raising and lowering device according to one of claims 1 or 2, characterised in that approximately half the length of the cable (9) or the ends of the cables remote from the windlasses (8) are secured to a horizontally extending arm (10) slewable around a vertical axis (12) on the free end of the outrigger (11).

4. Spare wheel raising and lowering device according to one of claims 2 and 3, characterised in that the arm (10) has approximately the length of the width of the spare wheel (7).

5. Spare wheel raising and lowering device according to one of claims 2 to 4, characterised in that the slewing axis (12) of the arm (10) is provided substantially in the gravity axis of the spare wheel (7).

6. Spare wheel raising and lowering device according to one of claims 1 to 5, characterised in that the shaft (6) is secured concentrically to one side of the rim (3) by means of a flange (13).

7. Spare wheel raising and lowering device according to claim 6, characterised in that the openings (14) formed in the rim (3) for the wheel screws are provided in order to secure the shaft (6).

8. Spare wheel raising and lowering device according to one of claims 6 to 8, characterised in that the flange (13) is supported on the shaft (6) by ribs (15).

9. Spare wheel raising and lowering device according to one of claims 1 to 8, characterised in that the windlasses (8) are formed by two guide flanges (16) at a distance from one another.

10. Spare wheel raising and lowering device according to one of claims 1 to 9, characterised in that the shaft (6) is operatively connected to a crank.

## Revendications

1. Dispositif de levage et d'abaissement de roue de secours (1) pour une roue de secours munie (7) d'une jante (3) qui est, de préférence, destinée à être placée derrière la cabine du chauffeur d'un véhicule utilitaire et qui comprend un arbre (6) traversant la roue de secours parallèlement à son axe de rotation, caractérisé en ce que l'arbre traversant (6) présente de part et d'autre de la roue de secours (7) un treuil (8) avec au moins une corde (9) dont une extrémité y est insérée ou ancrée et qui est fixée à une console (11) placée au-dessus de la roue de secours (7).

2. Dispositif de levage et d'abaissement de roue de secours selon la revendication 1, caractérisé en ce que la console (11) est réalisée de manière à pouvoir pivoter autour d'un axe vertical.

3. Dispositif de levage et d'abaissement de roue de secours selon l'une des revendications 1 et 2, caractérisé en ce que la corde (9) est fixée approximativement à la moitié de sa longueur ou les cordes sont fixées avec leurs extrémités opposées aux treuils (8) à un bras (10) s'étendant horizontalement et pouvant pivoter autour d'un axe vertical (12) au niveau de l'extrémité libre de la console (11).

4. Dispositif de levage et d'abaissement de roue de secours selon l'une des revendications 2 et 3, caractérisé en ce que la longueur du bras (10) correspond environ à la largeur de la roue de secours (7).

5. Dispositif de levage et d'abaissement de roue de secours selon l'une des revendications 2 à 4, caractérisé en ce que l'axe de pivotement (12) du bras (10) est prévu approximativement sur la ligne de gravité de la roue de secours (7).

6. Dispositif de levage et d'abaissement de roue de secours selon l'une des revendications 1 à 5, caractérisé en ce que l'arbre (6) est fixé de façon concentrique au moyen d'un flasque (13) sur un côté de la jante (3).

7. Dispositif de levage et d'abaissement de roue de secours selon la revendication 6, caractérisé en ce que, pour fixer l'arbre (6), sont prévues les ouvertures de passage (14) pour les boulons de la roue qui sont réalisées dans la jante (3).

8. Dispositif de levage et d'abaissement de roue de secours selon l'une des revendications 6 et 7, caractérisé en ce que le flasque (13) prend appui sur l'arbre (6) par des ailettes (15).

9. Dispositif de levage et d'abaissement de roue de secours selon l'une des revendications 1 à 8, caractérisé en ce que les treuils (8) sont réalisés par deux flasques de guidage (16) écartés l'un de l'autre.

10. Dispositif de levage et d'abaissement de roue de secours selon l'une des revendications 1 à 9, caractérisé en ce que l'arbre (6) est en liaison d'entraînement avec une bielle.
